# EUROPEAN PATENT SPECIFICATION

(11) **EP 0 621 971 B1**
(45) Date of publication and mention of the grant of the patent: **19.08.1998**
(21) Application number: 93904531.6
(22) Date of filing: 15.01.1993
(51) Int. Cl.: G06K 7/10

(54) **HANDS-FREE BODY MOUNTED LASER SCANNER AND METHOD OF USE**
AN EINEM KOERPER BEFESTIGTER HANDFREIER LASERABTASTER UND SEINE ANWENDUNG
LECTEUR LASER MAINS LIBRES MONTE SUR LE CORPS ET PROCEDE D'UTILISATION

(30) Priority: 16.01.1992 US 821917
(43) Date of publication of application: 02.11.1994
(73) Proprietor: METROLOGIC INSTRUMENTS, INC., Blackwood, NJ 08012 (US)
(72) Inventor: KNOWLES, Carl, H., Moorestown, NJ 08057 (US)
(74) Representative: Milhench, Howard Leslie
(86) International application number: US9300461
(87) International publication number: WO9314472

(56) References cited:
- EP-A- 323 848
- EP-A- 414 452
- US-A- 4 282 425
- US-A- 4 766 299
- US-A- 4 935 610

## Description

### Field of the Invention

This invention relates to a compact, lightweight laser scanner system and to a method of scanning.

### Background Art

Various types of laser scanning devices are in use and have been disclosed in the patent literature. Many of these scanners read bar codes, such as the Uniform Produce Code, which are imprinted on products, on labels affixed to the products, or on packaging for the products.

One type of scanner is referred to as a slot scanner. Typically slot scanners are mounted beneath or at the check out counter of a retail establishment, such as a supermarket. Another type of scanner is a hand-held scanner. That scanner typically includes a grip portion held in one's hand to enable the scanner to be directed onto a bar code so that the scan pattern produced by the scanner transverses the bar code symbol to read it.

In the last few years there has been increased development toward making hand-held scanners extremely small and lightweight. One such scanner is disclosed in my United States Letters Patent number 4,930,848 which is assigned to the same Assignee as this invention. That scanner comprises a hand grip portion and a body portion. Within the body portion is an "engine" having all of the necessary optical, mechanical and electrical components required to produce a laser beam scanning pattern for reading bar codes and for receiving light reflected therefrom to produce an electrical signal indicative thereof. Other hand-held laser scanners are disclosed in the patent literature, including United States patent numbers 4,387,297 (Swartz et al.), 4,409,470 (Swartz et al.), 4,460,120 (Swartz et al.), 4,607,156 (Koppenall et al.), 4,706,248 (Swartz et al.), and 4,575,625 (Knowles).

Although the hand-held scanners of the prior art allow for reading of a bar code, they all typically require that they be held in the hand of the user so that the pattern can be aimed at the bar code. In the course of checking out customers' purchases at a check out counter a clerk is thus required to continually pick up the scanner, direct its laser beam onto the symbols to effect the reading of the symbols and then either lay down the scanner between readings or between customers or to place it in a support cradle or mount so that the clerk can use his or her hands for other purposes.

US-A-4,766,299 shows a hand-mounted laser bar code reader. A switch associated with the laser is attached to a hand strap such that the bar code reader is switched on and off by deliberate flexure of muscles in the user's hand.

EP-A-0 323 848 shows bar code reading device for optically reading a bar code formed on an article by a main light source. The bar code reading device includes a light source control circuit for detecting that no article is set within the limited external space, thereby to inhibit the activation of the main light source. Thus, the need exists for a body mounted scanner system requiring only a very low level of power in the non-scanning state.

### Summary of the Invention

In one aspect of the invention, there is provided a compact, light-weight laser scanning system according to claim 1.

In another aspect of the invention, there is provided a method of scanning a symbol on an object according to claim 15.

A system embodying the invention (to be described) basically comprises a laser scanner engine for producing a laser scan pattern and a remote unit coupled thereto. The laser scanner engine which may be suitable for scanning coded symbols, e.g. UPC symbols, etc. includes means for mounting it on the body of the user, e.g., on the wrist, on the head, etc. Accordingly, the user may conveniently position the engine so that the scan pattern produced thereby is directed toward and traverses the symbol to be read. The engine is connected to the remote unit via conducting means. The remote unit includes electrical means for processing and decoding the signals received from the laser scanner engine and which are indicative of the symbols scanned. The remote unit may be also mounted on the body of the user or on some stationary support.

### Brief Description of the Drawings

Other aspects and many of the attendant advantages of the embodied invention will be readily appreciated when the same becomes better understood by reference to the following detailed description when considered in connection with the accompanying drawings wherein:
Fig. 1 is a perspective view of a scanning system constructed in accordance with an embodiment of this invention and comprising a laser scanning engine shown mounted on a wrist of a user and with a remote unit connected thereto via a cable;
Fig. 2 is an enlarged sectional view of the laser scanner engine taken along with line 2-2 of Fig. 1;
Fig. 3 is a side elevational view of one typical use of the system shown in Fig. 1, namely, a user seated at a counter and with a laser scanning engine mounted on a user's wrist while the remote unit is mounted on the user's body or alternatively mounted at the counter;
Fig. 4 is a side elevational view of an alternative use of the system as shown in Fig. 1, namely, the laser engine being affixed to a glove worn on the user's hand with the remote unit held in a holster or on a belt worn on the waist of the user;
Fig. 5 is an elevational view showing an alternative embodiment of the system shown in Fig. 1, namely with the laser engine mounted on a hat worn on the user's head; and
Fig. 6 is an elevational view showing yet another alternative embodiment of the system of Fig. 1, namely, the laser engine mounted on a headband worn on the user's head.

### Detailed Description of an Embodiment

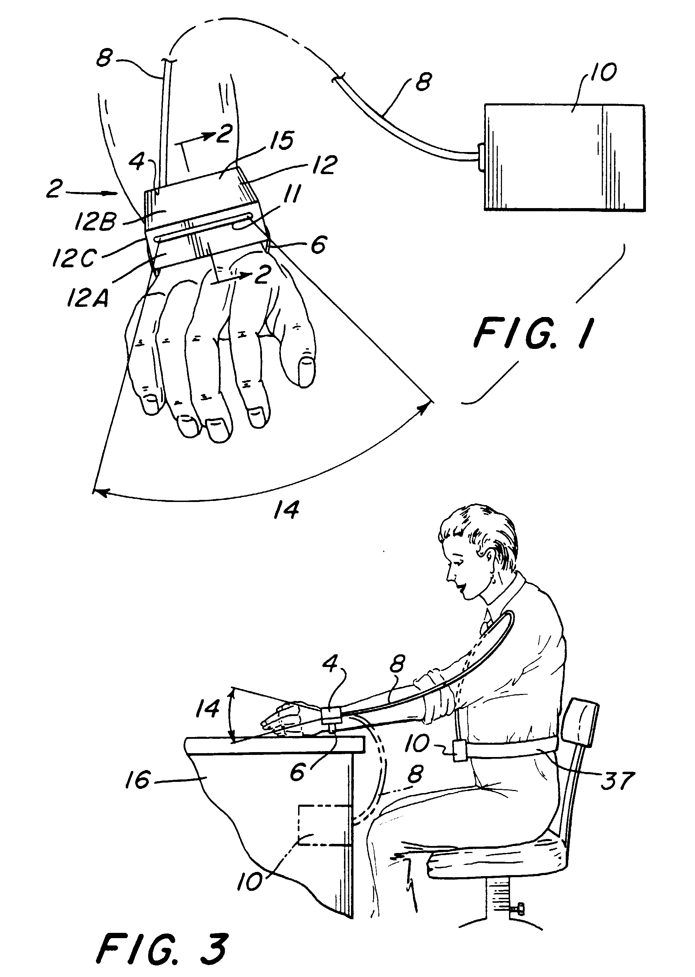

Referring now in greater detail to the drawing, where like characters refer to like parts, there is shown at 2 in Fig. 1 a laser scanner system constructed in accordance with an embodiment of this invention.

The system 2 basically comprises a laser scanning engine 4 and a remote unit 10 connected together via a cable 8. The engine 4 is preferably constructed in accordance with the teachings of my aforementioned patent 4,930,848 and my United States Patents 4 892 143, entitled Laser Scanner Engine with Folded Beam Path, and 4 958 894, entitled Bouncing Oscillating Scanning Device for Laser Scanning Apparatus, all of which are assigned to the same Assignee of this invention.

The laser scanner engine disclosed in US-A-4 892 143 is an extremely compact, and lightweight device. That device includes beam sweeping means, constructed in accordance with the teachings of US-A-4 958 894, for sweeping for laser beam through an arc to form a linear single line scanning pattern. The engine is contained within a housing 12 which also includes various optical components for folding the forming laser beam path downstream of the beam sweeping means to increase the focal length of the beam, thereby allowing for a smaller beam scan angle then otherwise possible with such a compact housing, to thus enable accurate and reliable reading of symbols located close to and substantially far away from the engine. The beam sweeping means includes an oscillating mirror system constructed in such a manner so that the speed of oscillations is substantially linear between reversals instead of the sinusoidal speed variation exhibited by prior art oscillating mirror devices.

As can be seen in Fig. 1, the laser engine 4 of the system 2 is arranged to be conveniently mounted on a portion of the body of the user of this case on the wrist of a user, via a strap 6. The cable 8 serves to carry the electrical signal produced by the engine (and which is representative of the bar code) to the remote unit 10 where the signal is processed, e.g., decoded. Power for the engine is provided via the cable from the remote unit 10.

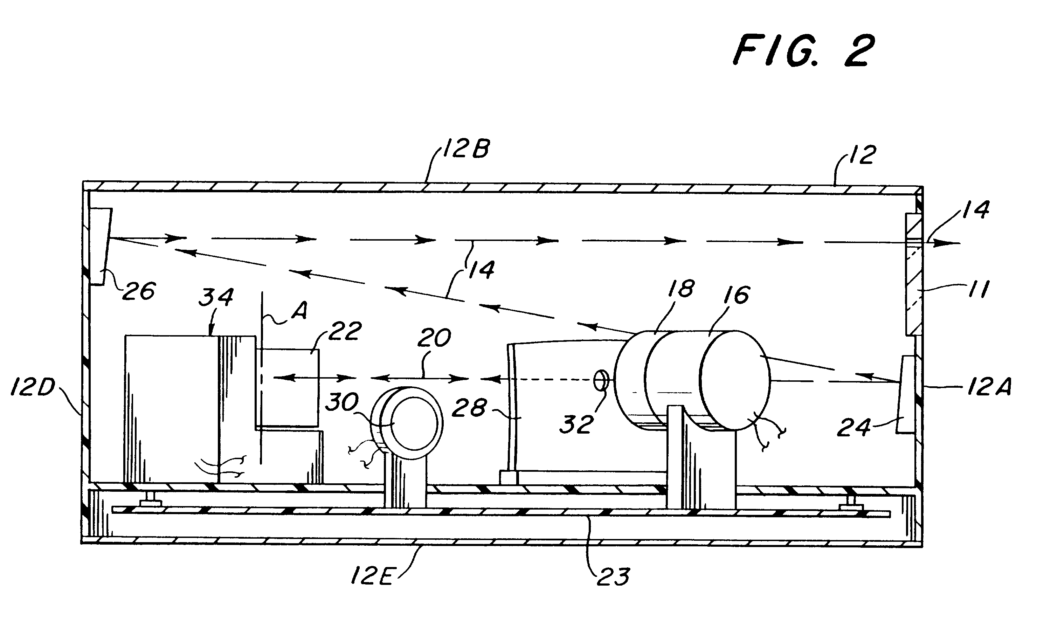

As can be seen clearly in Fig. 2, the engine 4 includes a semi-conductor laser diode 16 with associated focusing means 18. That means produces a focused laser light beam 20. The laser light beam 20 is projected within the housing 12 of the engine onto a beam sweeping mechanism 34 (constructed in accordance with the teachings of US-A-4 958 894). That mechanism includes a planar mirror 22 which is oscillated back and forth to sweep the laser beam 20 through an arc to thereby create the laser scan line 14 when projected into a surface. The line is ultimately projected out of the window 11 of the engine to traverse the bar code to be read.

In order to fold the swept laser beam within the housing downstream of the beam sweeping means, i.e., between the beam sweeping means and the window 11, the engine also includes the beam folding means constructed in accordance with the teachings of US-A-4 892 143. Thus, as can be seen the laser beam is first directed from the scanning or oscillating mirror 22 onto a stationary mirror 24 mounted on the front end wall 12A of the housing 12. The mirror 24 reflects the beam upward to a mirror 26 fixedly mounted on the rear end wall 12D of the housing. The mirror 26 is angled slightly downward so that the reflected beam is directed generally horizontally within the housing out through the window 11 in the front end wall 12A to create a linear scan line 14 when projected on a planar surface, e.g., a surface bearing a bar code.

The light reflected back from the bar code passes through the window 11 where it is received by mirror 26 and reflected back to mirror 24 and from there to the oscillating mirror 22. The oscillating mirror reflects the received light back to a fixed collecting mirror 28. The fixed collecting mirror includes a spherical concave surface for focusing the light onto a photo transistor 30. The photo transistor converts the reflected light into an electrical signal indicative thereof and provides that signal via cable 8 to the unit 10.

The device 4 being retroflective, with its collecting mirror 28 located between the laser diode 16 and the scanning mirror 22, thus includes an opening or hole 32 in the collecting mirror to enable the outgoing laser beam to pass therethrough to the beam sweeping (oscillating) mirror 22.

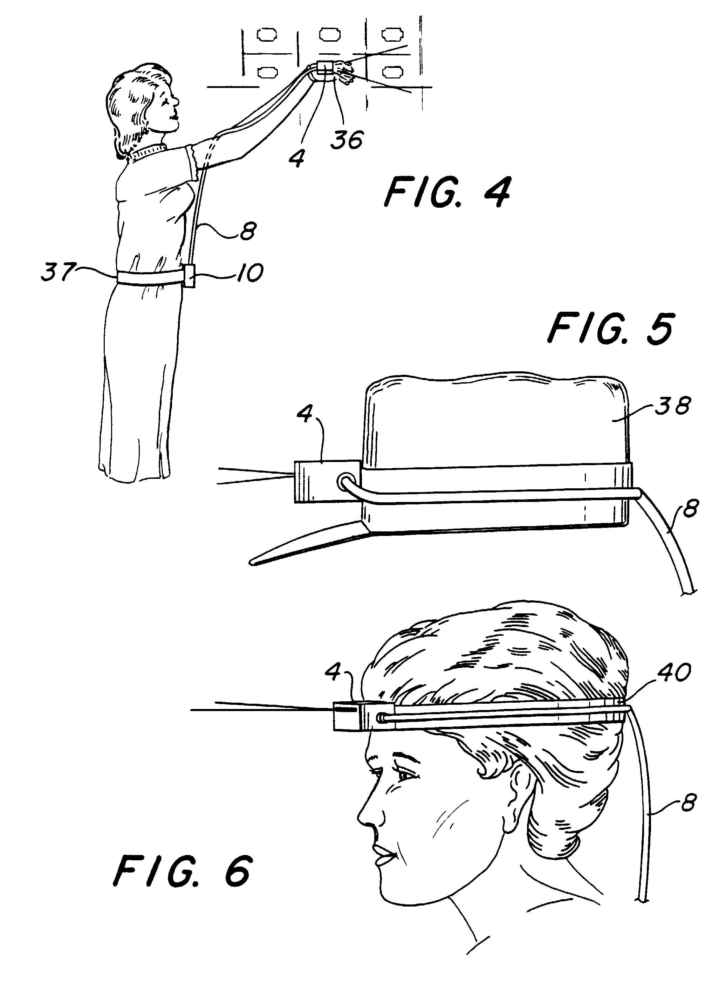

In Fig. 3 there is shown the system 2 of Fig. 1 arranged for use in one typical application. In this connection the system is arranged to be worn by a clerk or other person at a checkout counter of a store, at a checkout counter of a library, or some other venue. In particular the laser scanner engine 4 is mounted on the wrist of the clerk via the strap 6. In order to scan a bar code all that is necessary is for the clerk to hold up his or her arm with the scanner engine thereon so that the engine's window is directed toward the bar code whereupon the beam pattern 14 is projected onto the bar code to be read. This action, of course, leaves the operator's hands free for other purposes. The laser light reflected back from the bar code symbol passes through the window 11, through the beam folding optics, the oscillating mirror and the collecting mirror to the photo transistor which converts the received light into an electrical signal indicative of the bar code. That signal is provided via the cable to the remote unit for processing as is conventional.

The remote unit 10 shown in Fig. 3 comprises a housing in which its operational components, e.g., circuit boards, power supply, etc., are located. The unit 10 may be worn on a belt 37 or disposed in a holster (not shown) located on the waist of the user. Alternatively, the remote unit 10 may be mounted at the counter 16, itself. This alternative is shown by the phantom lines in Fig. 3.

In any event, the remote unit 10 employs components and performs functions which are well known in the scanning art. Thus, the unit 10 includes signal processing and decoding circuitry to process the electrical signal received from the laser engine, which is representative of the symbol scanned, into an electrical signal containing the information of the code. That signal may be stored in the unit for later retrieval or may be passed on to some piece of peripheral equipment, such as a cash register, a computer, or any other terminal via any suitable means (not shown), e.g., an RS232 port. The remote unit 10 may include an RF transceiver (not shown) for transmitting the processed electrical signals, e.g. the decoded symbol, to the peripheral equipment.

Inasmuch as the system of 2 shown in Figs. 1 and 3 is completely portable, the remote unit 10 also includes a power supply e.g., a battery, for supplying power via the cable 8 to the laser engine 4.

It should be noted that no trigger or other hand operated device is required to turn the laser engine on or off. An energy transmitter and receiver may be used to automatically turn on the laser scanner engine.

Thus, an infrared transmitter which is powered at all times while the laser engine is turned off, in conjunction with an infrared receiver, detects the presence of an object within the range of the scanner engine. The infrared receiver, upon detecting reflected energy from the object, operates control circuitry which turns on the laser beam, the laser scanner, the laser receiver and the signal processing circuitry of the laser engine. To operate the scanner engine, the scanner engine is brought close to an object upon which is a symbol to be read, and transmitted infrared energy is reflected back from the object turning on the laser engine and enabling the symbol to be read. Furthermore, when the reflected infrared energy is received, the control circuitry can also be used to turn on the processing and decoding circuitry in the remote unit 10.

Therefore, the laser engine and the remote unit require only a very low level of power in the non-scanning state which results in considerable savings when a battery is used to provide completely portable operations. Furthermore, this enhances the utility of the invention by eliminating requirement for any hand operated trigger mechanism or switch for the scanning and reading of symbols.

In Fig. 4 there is shown an alternative application of the subject system. In that application, an inventory clerk is shown using the system for inventory control. To that end, the laser engine 4 is shown mounted on a glove 36, so that by wearing the glove the clerk can scan labels affixed to bins or produces in inventory with both hands being free to handle the inventory items. The remote unit 10 may be mounted in the same manner as that described with reference to Fig. 3.

The laser scanner system 2 can also be used for "picking" applications, i.e., where a stock clerk is assigned to retrieve a series of items held in inventory. For such applications the remote unit 10 preferably includes a CMOS memory into which information identifying the items to be retrieved by the clerk has been entered and stored. An annunciator (not shown) is included in the remote unit 10 and coupled to its decoder circuitry so that when a clerk scans an item and that item is decoded and matches and code of an item to be retrieved and which is stored in the CMOS memory, an alarm or alert signal is produced to indicate such an occurrence.

Figs. 5 and 6 show further alternative manners of mounting the laser engine 4 of the subject system for hands-free operations. Thus, in Fig. 5 the laser engine 4 is shown mounted on a hat 38 to be worn on the user's head in a manner similar to the mounting of a light on a miner's helmet.

Fig. 6 shows the laser engine mounted on a headband 40. The headband 40 is similar to the conventional headband used by a doctor to mount a light or a reflector thereon. One advantage of the mounting system of Fig. 6 is that when the user moves his or her head to see the symbol to be read, the laser scan pattern 14 is also directed to the symbol to be read thereby providing a somewhat automatic aiming technique.

Without further elaboration the foregoing will so fully illustrate my invention that others may, by applying current or future knowledge, adopt the same for use under various conditions of service.

## Claims

1. A compact, light-weight laser scanning system (2) comprising a laser scanner engine (4) and a remote means (10), said laser scanning engine (4) comprising:
a housing (12);
a laser light beam source (16) ;
means (34) for sweeping said beam to create a line scan pattern (14);
means (24, 26) for projecting said line scan pattern (14) out of said housing (12) and onto a symbol, on an object, to be read;
means (30) for receiving light reflected from a symbol and converting said reflected light into an electrical signal indicative thereof;
means (6, 36, 38, 40) for mounting said laser scanner engine (4) on the body of a user; characterised by object detection means for detecting an object located within the range of the scanning system ; and
control circuitry connected automatically to turn on said laser light beam source, said beam sweeping means and said receiving means when an object is detected.

2. The system of claim 1 further comprising, in said remote means, signal processing and decoding means for processing said electrical signal so as to decode a symbol on a detected object, and automatically producing symbol character data representative of said decoded symbol in response to the decoding of a symbol.

3. The system of claim 2 wherein said control circuitry turns on said signal processing and decoding means when an object is detected.

4. A system of claim 2 or 3, which further comprises a radio frequency signal transmitting means, for transmitting said symbol character data to a peripheral device.

5. The system of any preceding claim further comprising power supply means for supplying electrical power to said laser scanning engine (4).

6. The system of claim 5 wherein said power supply means are located in said remote means (10), and said laser scanner engine (4) and said remote means (10) are connected by electrical conductor means (8) for carrying said electrical signal from said laser scanning engine (4) to said remote means (10) and for providing electrical power from said remote means (10) to said laser scanning engine (4).

7. The system of any preceding claim wherein said object detection means comprises means for transmitting energy to an object and means for receiving reflected energy from said object.

8. The system of claim 7 wherein said means for transmitting energy comprises an infrared transmitter and said means for receiving energy comprises an infrared receiver.

9. The system of any preceding claim further comprising means (37) for mounting said remote means (10) on the body of a user.

10. The system of any preceding claim wherein said means (6, 36, 38, 40) for mounting said laser scanner engine (4) comprises a glove (36) or a strap (6) for mounting said laser engine (4) on the wrist of a user.

11. The system of claim 10 wherein said housing (12) has a light transmission aperture (11) through which light can exit and enter said housing (12), the housing being affixed to said glove (36) so that in use said light transmission aperture (11) is oriented in the general direction in which the fingers of said hand extend.

12. The system of any of claims 1 to 9 wherein said means (6, 36, 38, 40) for mounting said laser scanner engine (4) comprises a hat (38) or a headband (40) for mounting said laser engine (4) on the head of a user.

13. The system of any preceding claim wherein said remote means (10) comprises a storage means for storing information representing symbols located on an object and means for alerting when said symbols are read.

14. A system of any preceding claims wherein said laser light beam source (16) comprises a laser diode (16).

15. A method of scanning a symbol on an object using a hands-free laser scanning system (2), with a laser scanner engine (4), said method comprising:
using a laser light beam source (16) in a housing (12) to produce a laser beam;
sweeping said beam to create a line scan pattern (14) ;
projecting said scan line pattern (14) out of the front of said housing (12) onto said symbol to be read;
receiving light reflected from said symbol and converting said reflected light into an electrical signal indicative thereof;
mounting said laser scanner engine (4) on a portion of the body of a user; characterised by
automatically producing said laser beam, sweeping said beam, projecting said scan line pattern (14) out of the front of said housing (12) onto said symbol to be read, receiving said light reflected from said symbol and converting said reflected light into an electrical signal indicative thereof, when said laser engine is moved so that said object is in proximity to said front of said housing (12) by means of object detection means for detecting an object located within the range of the scanning system ; and
control circuitry connected automatically to turn on said laser light beam source, said beam sweeping means and said receiving means when an object is detected.

## Patentansprüche

1. Kompaktes, leichtgewichtiges Laser-Abtastsystem (2) mit einem Laserabtastapparat (4) und einer entfernt angeordneten Einrichtung (10), wobei der Laserabtastapparat (4) aufweist:
ein Gehäuse (12),
eine Laserlichtstrahlquelle (16),
eine Einrichtung (34) zum Schwenken des Strahls, um ein Zeilenabtastmuster (14) zu bilden,
eine Einrichtung (24, 26) zum Projizieren des Zeilenabtastmusters (14) aus dem Gehäuse (12) auf ein auf einem Objekt befindliches, abzulesendes Symbol,
eine Einrichtung (30) zum Empfang von Licht, das von einem Symbol reflektiert wird, und zum Umwandeln des reflektierten Lichts in ein dieses wiedergebendes elektrisches Signal,
eine Einrichtung (6, 36, 38, 40) zum Anbringen des Laserabtastapparats (4) am Körper eines Benutzers,
**gekennzeichnet** durch
eine Objekterfassungseinrichtung zur Erfassung eines innerhalb des Bereichs des Abtastsystems angeordneten Objekts, und
eine Steuerschaltung zum automatischen Einschalten der Laserlichtstrahlquelle, der Strahlschwenkeinrichtung und der Empfangseinrichtung, wenn ein Objekt erfaßt ist.

2. System nach Anspruch 1 mit einer Signalverarbeitungsund Dekodiereinrichtung in der entfernt angeordneten Einrichtung, um unter Dekodierung eines Symbols auf dem erfaßten Objekt das elektrische Signal zu verarbeiten und aufgrund der Dekodierung eines Symbols automatisch Symbolzeichendaten zu erzeugen, die das dekodierte Symbol wiedergeben.

3. System nach Anspruch 2, wobei die Steuerschaltung die Signalverarbeitungs- und Dekodiereinrichtung einschaltet, wenn ein Objekt erfaßt ist.

4. System nach Anspruch 2 oder 3, mit einer Hochfrequenz-Signalübertragungseinrichtung zur Übertragung der Symbolzeichendaten an ein peripheres Gerät.

5. System nach einem der vorhergehenden Ansprüche mit einer Energieversorgungseinrichtung zur Lieferung elektrischer Energie an den Laserabtastapparat (4).

6. System nach Anspruch 5, wobei die Energiezuführeinrichtung in der entfernt angeordneten Einrichtung (10) vorgesehen ist und der Laserabtastapparat (4) und die entfernt angeordnete Einrichtung (10) durch eine elektrische Leitereinrichtung (8) zum Übertragen des elektrischen Signals von dem Laserabtastapparat (4) zu der entfernt angeordneten Einrichtung (10) und zum Liefern elektrischer Energie von der entfernt angeordneten Einrichtung (10) zu dem Laserabtastapparat (4) verbunden sind.

7. System nach einem der vorhergehenden Ansprüche, wobei die Erfassungseinrichtung eine Einrichtung zum Übertragen von Energie an ein Objekt und eine Einrichtung zum Empfang reflektierter Energie von dem Objekt beinhaltet.

8. System nach Anspruch 7, wobei die Einrichtung zur Übertragung von Energie einen Infrarotsender und die Einrichtung zum Empfang von Energie einen Infrarotempfänger beinhaltet.

9. System nach einem der vorhergehenden Ansprüche mit einer Einrichtung (37) zum Anbringen der entfernt angeordneten Einrichtung (10) am Körper eines Benutzers.

10. System nach einem der vorhergehenden Ansprüche, wobei die Einrichtung (6, 36, 38, 40) zum Anbringen des Laserabtastapparats (4) einen Handschuh (36) oder ein Band (6) zur Befestigung des Laserapparats (4) an dem Handgelenk eines Benutzers aufweist.

11. System nach Anspruch 10, wobei das Gehäuse (12) eine Lichtdurchgangsöffnung (11) aufweist, durch die Licht das Gehäuse (12) verlassen und in es eindringen kann, und wobei das Gehäuse so an dem Handschuh (36) angebracht ist, daß die Lichtdurchgangsöffnung (11) in im wesentlichen die Richtung, in die die Finger der Hand verlaufen, ausgerichtet ist.

12. System nach einem der Ansprüche 1 bis 9, wobei die Einrichtung (6, 36, 38, 40) zum Anbringen des Laserabtastapparats (4) einen Hut (38) oder ein Stirnband (40) zum Anbringen des Laserapparats (4) am Kopf eines Benutzers beinhaltet.

13. System nach einem der vorhergehenden Ansprüche, wobei die entfernt angeordnete Einrichtung (10) eine Speichereinrichtung zur Speicherung von Information, die auf einem Objekt angeordnete Symbole darstellt, und eine Einrichtung zum darauf aufmerksam machen, wenn die Symbole gelesen werden, aufweist.

14. System nach einem der vorhergehenden Ansprüche, wobei die Laserlichtstrahlquelle (16) eine Laserdiode (16) beinhaltet.

15. Verfahren zum Abtasten eines Symbols auf einem Objekt unter Verwendung eines Freihand-Laserabtastsystems (2) mit einem Laserabtastapparat (4), mit folgenden Schritten:
Verwenden einer Laserlichtstrahlquelle (16) in einem Gehäuse (12) zur Erzeugung eines Laserstrahls,
Schwenken des Strahls, um ein Zeilenabtastmuster (14) zu erzeugen,
Projizieren des Zeilenabtastmusters (14) aus der Front des Gehäuses (12) auf das zu lesende Symbol,
Empfangen von von dem Symbol reflektiertem Licht und Umwandeln des reflektierten Lichts in ein dieses wiedergebendes elektrisches Signal,
Anbringen des Laserabtastapparats (4) an einem Körperteil eines Benutzers,
dadurch **gekennzeichnet,** daß
mittels einer Objekterfassungseinrichtung zum Erfassen eines innerhalb des Bereichs des Abtastsystems befindlichen Objekts und einer Steuerschaltung zum automatischen Einschalten sowohl der Laserlichtstrahlquelle, einer Strahlschwenkeinrichtung als auch einer Empfangseinrichtung, wenn ein Objekt erfaßt ist, automatisch der Laserstrahl erzeugt wird, der Strahl geschwenkt wird, das Zeilenabtastmuster (14) aus der Front des Gehäuses (12) auf das zu lesende Symbol projiziert wird und das von dem Symbol reflektierte Licht empfangen und in ein dieses wiedergebendes elektrisches Signal umgewandelt wird, wenn der Laserapparat so bewegt wird, daß sich das Objekt in der Nähe der Front des Gehäuses (12) befindet.

## Revendications

1. Un système de lecture laser léger et compact (2) comprenant un appareil de balayage laser (4) et un moyen distant (10), ledit appareil de balayage laser (4) comprenant :
un boîtier (12) ;
une source de rayon laser (16) ;
un moyen de balayage (34) pour faire effectuer un balayage audit faisceau afin de créer un secteur de balayage en ligne (14) ;
un moyen (24, 26) pour projeter ledit secteur de balayage en ligne (14) hors dudit boîtier (12) et sur un symbole, sur un objet, en vue de le lire ;
un moyen (30) pour recevoir la lumière réfléchie par un symbole, et convertir ladite lumière réfléchie en un signal électrique indicatif de celle-ci ;
un moyen (6, 36, 38, 40) pour monter ledit appareil de balayage laser (4) sur le corps d'un utilisateur, caractérisé par :
un moyen de détection d'objet pour détecter un objet se trouvant dans le champ du système de lecture ; et
un circuit de commande connecté automatiquement pour mettre en service la source de rayon laser , ledit moyen de balayage pour le rayon et ledit moyen de réception lorsqu'un objet est détecté.

2. Un système selon la revendication 1, comprenant dans ledit moyen à distance des moyens de traitement et de décodage de signal pour traiter ledit signal électrique afin de décoder un symbole sur un objet détecté, et de produire automatiquement des données de caractère de symbole représentatives dudit symbole décodé en réponse au décodage d'un symbole.

3. Un système selon la revendication 2, dans lequel ledit circuit de commande met en service lesdits moyens de traitement et de décodage de signal lorsqu'un objet est détecté.

4. Un système selon la revendication 2 ou 3, comprenant en outre un moyen de transmission de signal haute fréquence pour transmettre lesdites données de caractère de symbole à un dispositif périphérique.

5. Un système selon l'une quelconque des revendications précédentes, comprenant en outre un moyen d'alimentation pour fournir de l'énergie électrique audit appareil de balayage laser (4).

6. Un système selon la revendication 5, dans lequel ledit moyen d'alimentation se trouve dans ledit moyen distant (10), et ledit appareil de balayage laser (4) et ledit moyen distant (10) sont connectés par des conducteurs électriques (8) destinés à transporter ledit signal électrique dudit appareil de balayage laser (4) jusqu'audit moyen distant (10), et pour fournir de l'énergie électrique audit appareil de balayage laser (4) à partir dudit moyen distant (10).

7. Un système selon l'une quelconque des revendications précédentes, dans lequel ledit moyen de détection d'objet comprend un moyen pour émettre de l'énergie vers un objet et un moyen pour recevoir de l'énergie réfléchie par ledit objet.

8. Un système selon la revendication 7, dans lequel ledit moyen pour émettre de l'énergie comprend un émetteur de rayonnement infrarouge et ledit moyen pour recevoir de l'énergie comprend un récepteur de ravonnement infrarouge.

9. Un système selon l'une quelconque des revendications précédentes, comprenant en outre un moyen (37) pour monter ledit moyen distant (10) sur le corps d'un utilisateur.

10. Un système selon l'une quelconque des revendications précédentes, dans lequel ledit moyen (6, 36, 38, 40) pour monter ledit appareil de balayage laser (4) comprend un gant (36) ou une bande (6) pour monter ledit appareil de balayage laser (4) sur le poignet d'un utilisateur.

11. Un système selon la revendication 10, dans lequel ledit boîtier (12) comporte une ouverture de transmission de lumière (11) à travers laquelle de la lumière peut sortir dudit boîtier (12) et y entrer, ledit boîtier étant fixé audit gant (36) afin que lors de l'utilisation, l'ouverture de transmission de lumière (11) soit orientée dans la direction générale dans laquelle s'étendent les doigts de ladite main.

12. Un système selon l'une quelconque des revendications 1 à 9, dans lequel ledit moyen (6, 36, 38, 40) pour monter ledit appareil de balayage laser (4) comprend un chapeau (38) ou un bandeau de tête (40) pour monter ledit appareil de balayage laser (4) sur la tête d'un utilisateur.

13. Un système selon l'une quelconque des revendications précédentes, dans lequel ledit moyen distant (10) comprend un moyen de stockage pour stocker des informations représentant des symboles se trouvant sur un objet, et un moyen pour alerter lorsque lesdits symboles sont lus.

14. Un système selon l'une quelconque des revendications précédentes, dans lequel ladite source de rayon laser (16) comprend une diode laser (16).

15. Un procédé pour lire un symbole sur un objet en utilisant un système de lecture laser mains libres (2), avec un appareil de balayage laser (4), lequel procédé consiste à :
utiliser une source de rayon laser (16) dans un boîtier (12) pour produire un rayon laser ;
faire effectuer un balayage audit rayon pour créer un secteur de balayage en ligne (14) ;
projeter ledit secteur de balayage en ligne (14) hors du devant dudit boîtier (12) sur ledit symbole à lire ;
recevoir de la lumière réfléchie par ledit symbole et convertir ladite lumière réfléchie en un signal électrique indicatif de celle-ci ;
monter ledit appareil de balayage laser (4) sur une partie du corps d'un utilisateur ;
et est caractérisé par le fait d'automatiquement produire ledit rayon laser, faire effectuer un balayage audit rayon, projeter ledit secteur de balayage en ligne (14) hors du devant dudit boîtier (12) sur ledit symbole à lire, recevoir ladite lumière réfléchie par ledit symbole et convertir ladite lumière réfléchie en un signal électrique indicateur de celle-ci, lorsque ledit appareil laser est déplacé de telle sorte qu'un objet soit à proximité dudit devant dudit boîtier (12), par l'intermédiaire d'un moyen de détection d'objet pour détecter un objet se trouvant dans le champ du système de lecture, et d'un circuit de commande connecté automatiquement pour mettre en service ladite source de rayon laser, ledit moyen de balayage de rayon et ledit moyen de réception lorsqu'un objet est détecté.
